(19)

Europäisches
Patentamt
European
Patent Office
Office européen
des brevets

(11) **EP 3 089 502 B1**

(12) **EUROPEAN PATENT SPECIFICATION**

(45) Date of publication and mention
of the grant of the patent:
**16.10.2019 Bulletin 2019/42**

(21) Application number: **14873962.6**

(22) Date of filing: **16.06.2014**

(51) Int Cl.:
**H04W 24/02** *(2009.01)*

(86) International application number:
**PCT/CN2014/079979**

(87) International publication number:
**WO 2015/096408 (02.07.2015 Gazette 2015/26)**

(54) **METHOD AND SYSTEM FOR USER PERCEPTION EVALUATION**

VERFAHREN UND SYSTEM ZUR BEWERTUNG VON BENUTZERWAHRNEHMUNGEN

PROCÉDÉ ET SYSTÈME D'ÉVALUATION DE PERCEPTION D'UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2013 CN 201310729388**

(43) Date of publication of application:
**02.11.2016 Bulletin 2016/44**

(73) Proprietor: **ZTE Corporation
Shenzhen, Guangdong 518057 (CN)**

(72) Inventors:
• **ZHAO, Jingbo
Shenzhen
Guangdong Province 518057 (CN)**
• **JING, Weidong
Shenzhen
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
CN-A- 101 562 829    CN-A- 101 562 830
CN-A- 102 546 220    CN-A- 102 685 717
US-A1- 2012 008 499

• YU DU ET AL: "A study on the extraction and application of customer perception indexes in mobile network", IT IN MEDICINE&EDUCATION, 2009. ITIME '09. IEEE INTERNATIONAL SYMPOSIUM ON, IEEE, PISCATAWAY, NJ, USA, 14 August 2009 (2009-08-14), pages 436-440, XP031528423, ISBN: 978-1-4244-3928-7
• YAN GONG ET AL: "Model-Based Approach to Measuring Quality of Experience", EMERGING NETWORK INTELLIGENCE, 2009 FIRST INTERNATIONAL CONFERENCE ON, IEEE, PISCATAWAY, NJ, USA, 11 October 2009 (2009-10-11), pages 29-32, XP031593754, ISBN: 978-0-7695-3835-8
• YOU LIYAN ET AL: "A novel method to calculate QoE-oriented dynamic weights of indicators for telecommunication service", 2013 IEEE INTERNATIONAL CONFERENCE OF IEEE REGION 10 (TENCON 2013), IEEE, 22 October 2013 (2013-10-22), pages 1-4, XP032553796, ISSN: 2159-3442, DOI: 10.1109/TENCON.2013.6718476 ISBN: 978-1-4799-2825-5 [retrieved on 2014-01-21]

EP 3 089 502 B1

## Description

### Technical Field

The present disclosure relates to the field of communications, and in particular to a method and system for evaluating user perception.

### Background

Mobile internet services are developed rapidly at present, mobile internet users are increased dramatically, and operators are focusing on the user experience of internet surfing. For the operators, when functions between similar competitive products are not very different, the user experience will become the core value of the products.

All planning activities of the operators and the planning and optimization of network services should be user experience-focused, the user experience will be the core of competition for wireless 3$^{rd}$ Generation (3G) services, data services and broadband private line services, and the Quality of Experience (QoE) of users will become a hot era topic certainly. How to guarantee provision of high-quality network services for customers, improve the recognition of the customers to brands and maintain the loyalty of the customers is a topic to be researched. When new customers are developed, a more visual and effective persuasion should be provided. How to regularly provide network quality-of-service reports for existing customers, make the customers clearly know the quality of network services and ensure avoidance of withdrawal losses caused by subjective factors are the problems needing to be solved by mobile operators as soon as possible.

A QoE user peer-to-peer concept refers to a subjective experience of a user to a service and is a perception to an overall performance of a system from a perspective of the user. A user perception evaluation technology in the related art refers to evaluation of a user perception in terms of accessibility, completeness, instantaneity and the like in a user internet-surfing process. However, different services used by the user in a practical internet-surfing process and the difference among the using processes of different services are not taken into consideration.

Currently, internet services are full of variety. A mobile user probably uses various services in the practical internet-surfing process, and various services have different service features. Thus, it is necessary to use different evaluation indexes for the perception evaluation of different services. The overall perception experience of the user is likely to be cooperatively influenced by the perception experience of multiple services. An allocation mode of proportions of the perception experience of different services in the entire perception evaluation of the user decides the accuracy of the final evaluation result of the perception experience of the user. For example, if a user spends much time using Weibo and spends less time using QQ, it is relatively reasonable that the perception of the user when using a Weibo service accounts for a larger proportion in the entire perception of the user, while the perception of the user when using a QQ service accounts for a smaller proportion in the entire perception of the user.

A technology capable of evaluating a user perception according to specific services used by a user does not exist in the conventional perception evaluation technology, and the problem of allocation of service weights in a process of evaluating the user perception according to the services is not involved.

An effective solution is not proposed currently for the problems in the related art that a service using range and a service using habit of the user are less considered.

The document "YU DU ET AL: 'A study on the extraction and application of customer perception indexes in mobile network', IT IN MEDICINE&EDUCATION, 2009. ITIME'09. IEEE INTERNATIONAL SYMPOSIUM ON, IEEE, PISCATAWAY, NJ, USA, 14 August 2009 (2009-08-14), pages 436-440, ISBN:978-1-4244-3928-7" and US2012/008499 provide the related technical solutions; however, the above mentioned problem still remains unsolved.

### Summary

The invention provides a method and system for evaluating user perception according to the claims, which are intended to at least solve the problems.

According to one aspect of the present invention, a method for evaluating user perception is provided, which may include that: a perception evaluation result of each service among multiple services used by a user is acquired; a corresponding service weight value is allocated to each service according to service parameter information of each service used by the user, wherein the service weight value refers to a ratio of each service to the multiple services; and an overall perception evaluation result of the multiple services used by the user is generated according to all perception evaluation results and corresponding service weight values.

In an exemplary embodiment, the step that the perception evaluation result of each service among the multiple services used by the user is acquired may include that: a perception evaluation grading operation is executed on each service by using a pre-determined algorithm according to a service evaluation index corresponding to each service to obtain the perception evaluation result.

In an exemplary embodiment, before the perception evaluation result of each service among the multiple services used by the user is acquired, the method may include that: the service evaluation index corresponding to each service is set according to a service type of each service.

In an exemplary embodiment, before the service evaluation index corresponding to each service is set according to the service type of each service, the method may include that: service data generated in an internet-surfing process of the user is acquired; and each service used by the user and the service type corresponding to each service are identified from the service data.

In an exemplary embodiment, the service type may include: a webpage browsing service, an instant messaging service, a blog service, a Weibo service, a search service, a game service or a video watching service.

In an exemplary embodiment, when the service type is the webpage browsing service, the service evaluation index may include at least one of: a home page request success rate, a home page request average total delay, a session-level webpage complete opening rate, a session-level webpage complete opening delay and a session-level webpage complete response average delay. When the service type is the instant messaging service, the service evaluation index may include at least one of: a login success rate, an uplink message success rate, an uplink message average delay, a downlink message success rate and a downlink message average delay. When the service type is the Weibo service, the service evaluation index may include at least one of: a refreshing response average delay, a refreshing operation success rate, a refreshing speed, an issuing response average delay, an issuing operation success rate and an issuing speed.

In an exemplary embodiment, the service parameter information may include at least one of: a service using time length, a service using frequency and a service traffic magnitude.

According to another aspect of the present invention, a system for evaluating user perception is provided, which may include: a first acquisition component, configured to acquire a perception evaluation result of each service among multiple services used by a user; an allocation component, configured to allocate a service weight value corresponding to each service according to service parameter information of each service used by the user, wherein the service weight value refers to a ratio of each service to the multiple services; and a generation component, configured to generate an overall perception evaluation result of the multiple services used by the user according to all perception evaluation results and corresponding service weight values.

In an exemplary embodiment, the system may further include: a setting component, configured to set a service evaluation index corresponding to each service according to a service type of each service; and a grading component, configured to execute a perception evaluation grading operation on each service by using a pre-determined algorithm according to the service evaluation index corresponding to each service to obtain the perception evaluation result.

In an exemplary embodiment, the system may further include: a second acquisition component, configured to acquire service data generated in an internet-surfing process of the user; and an identification component, configured to identify each service used by the user and the service type corresponding to each service from the service data.

By means of the embodiments of the present disclosure, a service weight value is allocated to each service according to the service parameter information of each service used by the user and an overall perception evaluation is performed on all services used by the user to obtain an overall perception evaluation result according to the acquired perception evaluation result of each service and the corresponding service weight value, therefore, the problems in the related art that a service using range and a service using habit of the user are less considered are solved, the weight of each service participating in overall grading can be dynamically allocated or regulated according to the using habit of the user or the difference between the using frequencies or amounts of different services used by the user, thereby achieving the effects of making perception evaluation more scientific and improving the accuracy of perception evaluation.

## Brief Description of the Drawings

The drawings described here are intended to provide further understanding of the present disclosure, and form a part of the present disclosure. The schematic embodiments and descriptions of the present disclosure are intended to explain the present disclosure, and do not form improper limits to the present disclosure. In the drawings:

Fig. 1 is a flowchart of a method for evaluating user perception according to an embodiment of the present disclosure;
Fig. 2 is a structural diagram of a system for evaluating user perception according to an embodiment of the present disclosure;
Fig. 3 is a structural diagram of an exemplary system for evaluating user perception according to an embodiment of the present disclosure;
Fig. 4 is an architecture diagram of a system for evaluating user perception according to an exemplary embodiment of the present disclosure;
Fig. 5 is a diagram of a service-based comprehensive method for evaluating user perception according to an exemplary embodiment of the present disclosure;

Fig. 6 is an example 1 of dynamic regulation of service weights in perception evaluation according to an exemplary embodiment of the present disclosure;

Fig. 7 is an example 2 of dynamic regulation of service weights in perception evaluation according to an exemplary embodiment of the present disclosure; and

Fig. 8 is an example 3 of dynamic regulation of service weights in perception evaluation according to an exemplary embodiment of the present disclosure.

## Detailed Description of the Embodiments

The present disclosure is explained below with reference to the drawings and the embodiments in detail. It is important to note that the embodiments of the present disclosure and the characteristics in the embodiments can be combined under the condition of no conflicts.

In order to more conveniently understand the embodiments of the present disclosure, before the embodiments of the present disclosure are described in detail, the main idea of the embodiments of the present disclosure is simply introduced below first. The user perception evaluation can be obtained by comprehensively evaluating the perception experience of multiple services used by a user in the internet, and when an overall perception is generated by means of the perception experience of different services, the weight of each service can be dynamically allocated and regulated. The perception evaluation mode can fully consider the service using differences between individual users, these differences are mainly embodied in differences between hobbies of all users and differences between the used services, for example, some services among the services used by the users are frequently used, while some services are infrequently used. If it can be achieved that the services frequently used by the users account for a larger proportion in the user perception evaluation and the services infrequently used by the users account for a smaller proportion in the user perception evaluation, the perception evaluation is more scientific and more approaches a real perception of the user.

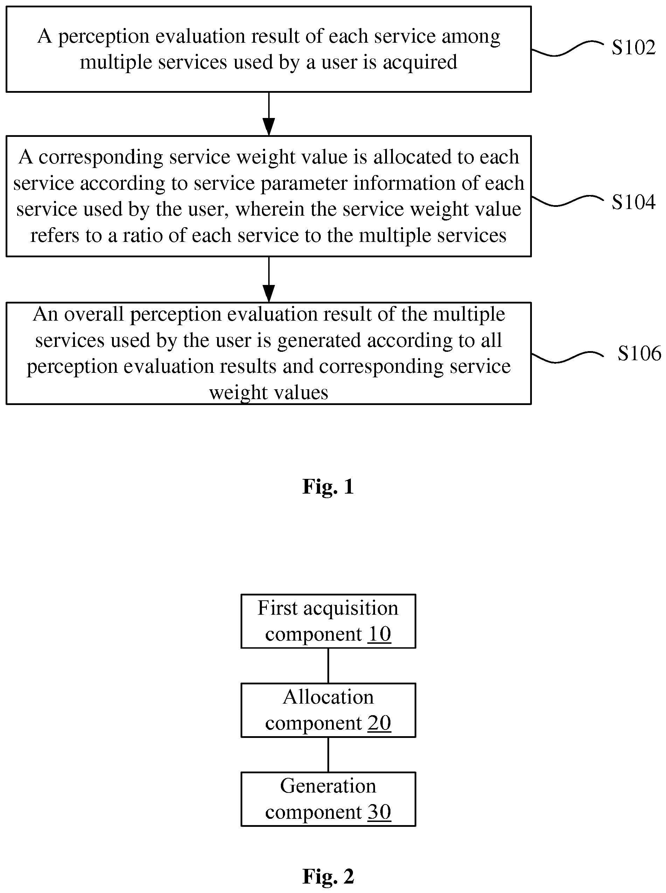

An embodiment of the present disclosure provides a method for evaluating user perception. Fig. 1 is a flowchart of a method for evaluating user perception according to an embodiment of the present disclosure. As shown in Fig. 1, the method mainly includes the steps (Step S102 to Step S106) as follows.

Step S102: A perception evaluation result of each service among multiple services used by a user is acquired.

Step S104: A corresponding service weight value is allocated to each service according to service parameter information of each service used by the user, wherein the service weight value refers to a ratio of each service to the multiple services.

Step S106: An overall perception evaluation result of the multiple services used by the user is generated according to all perception evaluation results and corresponding service weight values.

By means of all the steps, the overall perception evaluation result can be obtained in a mode of allocating the service weight value to each service according to the service parameter information of each service used by the user and performing overall perception evaluation on all services used by the user according to the acquired perception evaluation result of each service and the corresponding service weight value. In this way, the comprehensive perception evaluation result becomes more scientific and more approaches a user perception.

In the embodiment, Step S102 may be implemented in the following modes: executing a perception evaluation grading operation on each service by using a pre-determined algorithm according to a service evaluation index corresponding to each service to obtain the perception evaluation result.

In an exemplary implementation mode of the embodiment, before Step S102 is executed, the service evaluation index corresponding to each service may be set according to a service type of each service. In another exemplary implementation mode of the embodiment, before the service evaluation index corresponding to each service is set according to the service type of each service, service data generated in an internet-surfing process of the user can be acquired; and each service used by the user and the service type corresponding to each service are identified from the service data.

In the embodiment, the service type may include: a webpage browsing service, an instant messaging service, a blog service, a Weibo service, a search service, a game service or a video watching service. It is important to note that in practical application, there may be a lot of service types in addition to the service types described here. The service types provided here are only the types of services frequently used by mobile users at present, and do not form limitations.

Service indexes needing to be used in a service grading process are simply explained by taking some of the service types here as an example. For example, (1) when the service type is the webpage browsing service, the service evaluation index may include at least one of: a home page request success rate, a home page request average total delay, a session-level webpage complete opening rate, a session-level webpage complete opening delay and a session-level webpage complete response average delay; (2) when the service type is the instant messaging service, the service evaluation index may include at least one of: a login success rate, an uplink message success rate, an uplink message average delay, a downlink message success rate and a downlink message average delay; and (3) when the service type is the Weibo service, the service evaluation index may include at least one of: a refreshing response average delay, a refreshing operation success rate, a refreshing speed, an issuing response average delay, an issuing operation success rate and an issuing speed.

In the embodiment, the service parameter information may include at least one of: a service using time length, a service using frequency and a service traffic magnitude. Certainly, in practical application, there may be a lot of types of service parameter information in addition to the pieces of service parameter information described here. Service parameters provided here are only relatively-common service parameters, and do not form limitations.

Another embodiment of the present disclosure provides a system for evaluating user perception which is configured to implement the method for evaluating user perception provided by the above embodiment. Fig. 2 is a structural diagram of a system for evaluating user perception according to an embodiment of the present disclosure. As shown in Fig. 2, the system mainly includes: a first acquisition component 10, an allocation component 20 and a generation component 30, which will be described in detail as follows.

The first acquisition component 10 is configured to acquire a perception evaluation result of each service among multiple services used by a user.

The allocation component 20 is coupled with the first acquisition component 10, and is configured to allocate a service weight value corresponding to each service according to service parameter information of each service used by the user, wherein the service weight value refers to a ratio of each service to the multiple services.

The generation component 30 is coupled with the allocation component 20, and is configured to generate an overall perception evaluation result of the multiple services used by the user according to all perception evaluation results and corresponding service weight values.

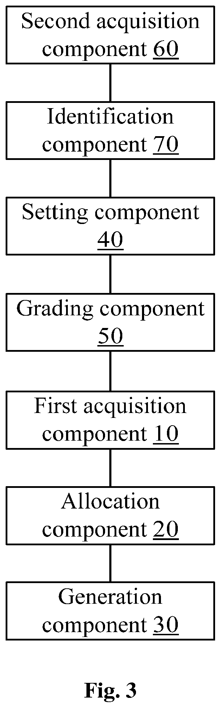

Fig. 3 is a structural diagram of an exemplary system for evaluating user perception according to an embodiment of the present disclosure. As shown in Fig. 3, the exemplary system for evaluating user perception may further include: a setting component 40, configured to set the service evaluation index corresponding to each service according to a service type of each service; and a grading component 50, coupled with the setting component 40 and the first acquisition component 10 respectively, and configured to execute a perception evaluation grading operation on each service by using a pre-determined algorithm according to a service evaluation index corresponding to each service to obtain the perception evaluation result.

In an exemplary embodiment, the exemplary system for evaluating user perception may further include: a second acquisition component 60, configured to acquire service data generated in an internet-surfing process of the user; and an identification component 70, coupled with the second acquisition component 60 and the setting component 40 respectively, and configured to identify each service used by the user and the service type corresponding to each service from the service data.

By means of the method and system for evaluating user perception provided by the embodiments, the weight of each service participating in overall grading can be dynamically allocated or regulated according to the using habit of the user or the difference between the using frequencies or amounts of different services used by the user, thereby making perception evaluation more scientific and improving the accuracy of perception evaluation.

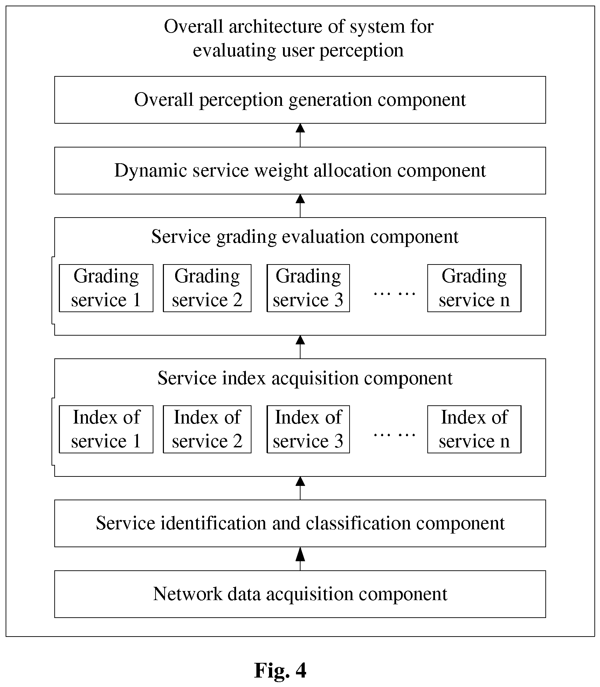

The method and system for evaluating user perception provided by the embodiments are described and explained below with reference to Fig. 4 to Fig. 8 and the exemplary embodiment in more detail.

In order to conveniently describe the method for evaluating user perception provided by the exemplary embodiment, the architecture of the system for evaluating user perception in the exemplary embodiment is explained first.

Fig. 4 is an architecture diagram of a system for evaluating user perception according to an exemplary embodiment of the present disclosure. As shown in Fig. 4, the system for evaluating user perception mainly includes: a network data acquisition component (namely, a component configured to acquire a data service of mobile internet), a service identification and classification component, a service index acquisition component, a service grading evaluation component, a dynamic service weight allocation component and an overall perception generation component. The specific functions of these components will be simply explained below.

(1) The network data acquisition component is located at the lowest layer of the user perception system and is configured to acquire internet-surfing data of a mobile user. (2) The service identification and classification component is configured to perform service identification and classification on the internet-surfing data of the mobile user. (3) The service index acquisition component is configured to set different service indexes according to features of different services and generate service indexes of the user according to the data of the user. (4) The service grading evaluation component is configured to evaluate each service used by the user according to the service indexes of the user to obtain a service grade. (5) The dynamic service weight allocation component is configured to allocate service weights of the user according to a practical using condition of each service of the user. (6) The overall perception generation component is configured to generate an overall perception result of the user according to the service grades and service weights of the user.

Here, it is important to note that the names or number of all components contained in the architecture of the system for evaluating user perception provided by the exemplary embodiment are not consistent with the names or number of all components in the system for evaluating user perception provided by the above embodiments, and the functions of all components are not completely consistent or are even in an inclusion or overlap function relationship. However, the inconsistency is caused by the fact that the exemplary embodiment only serves as an exemplary implementation mode of the above embodiment. The solutions provided by the two embodiments can completely achieve the same effect.

On the hardware basis of the architecture of the system for evaluating user perception provided by the exemplary embodiment, a method for evaluating user perception (specifically called a perception evaluation method in which service weights are dynamically regulated in the following descriptions) provided by the exemplary embodiment is described in detail. Simply, the perception evaluation method in which service weights are dynamically regulated mainly includes the steps as follows.

1. A network data acquisition component acquires service data generated in an internet-surfing process of a mobile user. 2. A service identification and classification component identifies a service type of each service used by the user from the service data generated by the user. 3. A service index acquisition component calculates a service index of each service according to the service data of the user. 4. A service grading evaluation component performs perception evaluation grading on each service used by the user by means of a specific algorithm (namely the predetermined algorithm, selected according to an implementation requirement in practical application). 5. A dynamic service weight allocation component dynamically allocates weights according to a specific using condition (namely the service parameter information, wherein the selection frequency of the parameter may be determined according to a practical requirement in practical application) of each service of the user. 6. An overall perception generation component generates an overall perception evaluation result of the user by means of a specific algorithm (selected according to an implementation requirement in practical application) according to each service grade of the user and the weight allocated to each service.

Specifically, the method for evaluating user perception provided by the exemplary embodiment can be further described by taking common service types in the provided service types as an example.

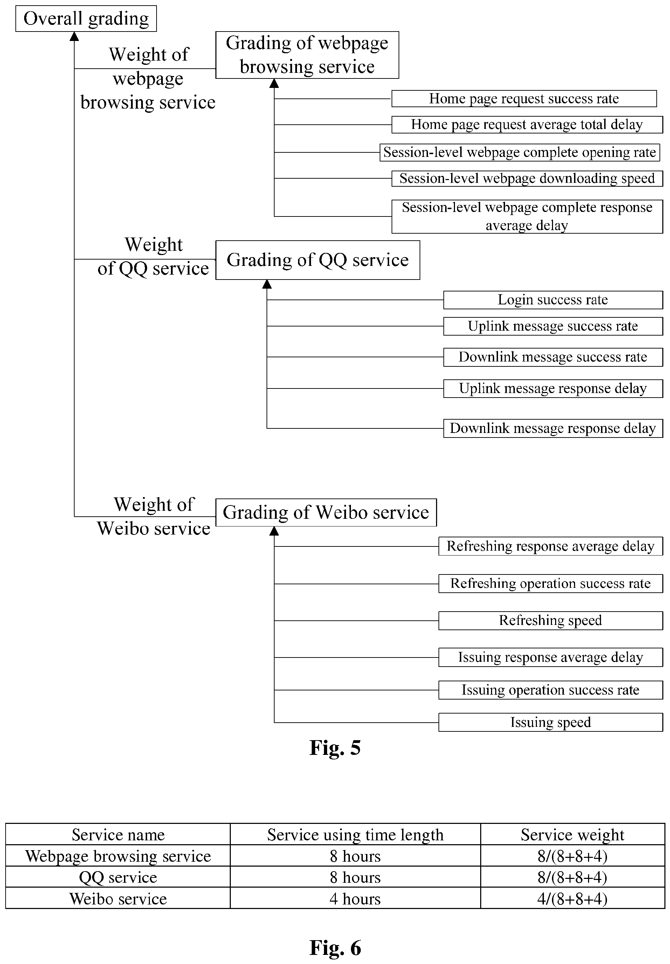

Fig. 5 is a diagram of a service-based comprehensive method for evaluating user perception according to an exemplary embodiment of the present disclosure. As shown in Fig. 5, if services used by a user include a webpage browsing service, a QQ service and a Weibo service, the using features of these services are different, so that evaluation indexes are set to be different. (1) An index for evaluating the webpage browsing service may include: a home page request success rate, a home page request average total delay, a session-level webpage complete opening rate, a session-level webpage complete opening delay and a session-level webpage complete response average delay. (2) An index for evaluating the QQ service may include: a login success rate, an uplink message success rate, an uplink message average delay, a downlink message success rate and a downlink message average delay. (3) An index for evaluating the Weibo service may include: a refreshing response average delay, a refreshing operation success rate, a refreshing speed, an issuing response average delay, an issuing operation success rate and an issuing speed.

In such a way, a webpage browsing service grade, a QQ service grade and a Weibo service grade of the user can be obtained respectively according to practical service indexes of the user. An overall grade of the user is obtained according to the service grades and service weights of the user, wherein the service weights are dynamically allocated according to the practical service using frequency or amount of the user. A method for dynamically allocating service weights will be explained below separately.

The services and the service indexes used for service perception evaluation here are only intended to serve as an example. The service indexes needed in practical application may be added or cut down in perception evaluation according to practical conditions.

Fig. 6 is an example 1 of dynamic regulation of service weights in perception evaluation according to an exemplary embodiment of the present disclosure. As shown in Fig. 6, a method for allocating service weights according to the service using time length of a user is explained. If in Fig. 5, the using time length of the webpage browsing service of the user is 8 hours, the using time length of the QQ service is 8 hours and the using time length of the Weibo service is 4 hours, the weight of the webpage browsing service in an overall perception grade is 8/(8+8+4)=0.4. Similarly, the weight of the QQ service is 0.4, and the weight of the Weibo service is 0.2.

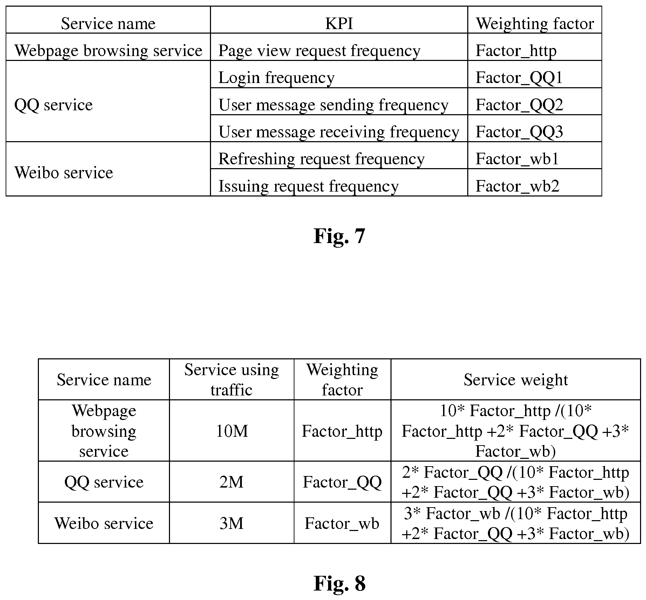

Fig. 7 is an example 2 of dynamic regulation of service weights in perception evaluation according to an exemplary embodiment of the present disclosure. As shown in Fig. 7, a method for allocating service weights according to a service using frequency index of a user is explained. In the method, a weighting factor can be added into an adopted algorithm, wherein a specific value of the weighting factor is flexibly configurable. Since the meanings represented by single service operations for different services are different, in order to balance the difference between the services, the weighting factor is added to balance weights, when different service frequency indexes participate in grading, via weighting factors. From data in Fig. 7, it can be seen that:

weight of webpage browsing service = page view request frequency
* Factor_http/(page view request frequency * Factor_http + login frequency * Factor_QQ1
+ user message sending frequency * Factor_QQ2 + user message receiving frequency
* Factor_QQ3 + refreshing request frequency * Factor_wb1 + issuing request frequency
* Factor_wb2).

weight of QQ service = (login frequency * Factor_QQ1 + user message sending frequency
* Factor_QQ2 + user message receiving frequency * Factor_QQ3)/
(page view request frequency * Factor_http + login frequency * Factor_QQ1
+ user message sending frequency * Factor_QQ2 + user message receiving frequency
* Factor_QQ3 + refreshing request frequency * Factor_wb1 + issuing request frequency
* Factor_wb2).

weight of Weibo service = (refreshing request frequency * Factor_wb1
+ issuing request frequency * Factor_wb2)/
(page view request frequency * Factor_http + login frequency * Factor_QQ1
+ user message sending frequency * Factor_QQ2 + user message receiving frequency
* Factor_QQ3 + refreshing request frequency * Factor_wb1 + issuing request frequency
* Factor_wb2).

Fig. 8 is an example 3 of dynamic regulation of service weights in perception evaluation according to an exemplary embodiment of the present disclosure. As shown in Fig. 8, a method for allocating service weights according to the service traffic of a user is explained. Since the characteristics of all services are different, namely there are large-traffic services and small-traffic services, in order to balance the difference of the characteristics, a weighting factor is added to balance different services. In Fig. 8, compared with the QQ service and the Weibo service, the webpage browsing service has larger service traffic. The weight of the service can be reduced by setting a weighting factor to be small. The corresponding QQ service belongs to a small-traffic service, and the weight of the service can be increased by setting the weighting factor to be large. The difference among different service traffic characteristics can be balanced by adding the weighting factor into an overall perception evaluation process, so that the service weights are more reasonably allocated. From data in Fig. 8, it can be seen that:

weight of webpage browsing service = 10 * Factor_http/(10 * Factor_http + 2 * Factor_QQ + 3 * Factor_wb).

weight of QQ service = 2 * Factor_QQ/(10 * Factor_http + 2 * Factor_QQ + 3 * Factor_wb).

weight of Weibo service = 3 * Factor_wb/(10 * Factor_http + 2 * Factor_QQ + 3 * Factor_wb).

By means of the exemplary embodiment, the weight of each service participating in overall grading can be dynamically allocated or regulated according to the using habit of the user or the difference between the using frequencies or amounts of different services used by the user, thereby making perception evaluation more scientific and improving the accuracy of perception evaluation.

It is important to note that all components can be implemented by hardware. For example, a processor includes all components, or all components are located in a processor.

In another embodiment, software is also provided, which is configured to execute the technical solutions described in the embodiments and the exemplary implementation mode.

In another embodiment, a storage medium is also provided. The software is stored in the storage medium. The storage medium includes (but not limited to): an optical disc, a floppy disk, a hard disk, an erasable memory and the like.

From the above descriptions, it can be seen that the embodiments of the present disclosure achieve the technical effects as follows. Compared with the perception evaluation method adopted in the related art, the technical solution provided by the embodiments of the present disclosure considers the service difference in perception evaluation, different evaluation indexes are set for different services, the service perception evaluation more approaches a true perception of the user, and the weight of each service participating in overall grading can be dynamically allocated or regulated according to the using habit of the user or the difference between the using frequencies or amounts of different services used by the user, thereby making perception evaluation more scientific and improving the accuracy of perception evaluation.

Obviously, those skilled in the art should understand that all components or all steps in the present disclosure can be realized by using a general calculation apparatus, can be centralized on a single calculation apparatus or can be distributed on a network composed of a plurality of calculation apparatuses. Optionally, they can be realized by using executable program codes of the calculation apparatuses. Thus, they can be stored in a storage apparatus and executed by the calculation apparatuses, the shown or described steps can be executed in a sequence different from this sequence under certain conditions, or they are manufactured into each integrated circuit component respectively, or a plurality of components or steps therein are manufactured into a single integrated circuit component. Thus, the present disclosure is not limited to a combination of any specific hardware and software.

The above is only the exemplary embodiments of the present disclosure, and is not intended to limit the present disclosure. There can be various modifications and variations in the present disclosure for those skilled in the art within the scope of the claims.

**Industrial Applicability**

As above, by means of the embodiments of the present disclosure and the exemplary implementation mode, the weight of each service participating in overall grading can be dynamically allocated or regulated according to the using habit of the user or the difference between the using frequencies or amounts of different services used by the user, thereby making perception evaluation more scientific and improving the accuracy of perception evaluation.

**Claims**

1. A method for evaluating user perception performed by a system, comprising:

   acquiring (S102) a perception evaluation result of each service among multiple services used by a user ;
   allocating (S104) a corresponding service weight value to each service according to service parameter information of each service used by the user, wherein the service weight value refers to a ratio of each service to the multiple services ; and
   generating (S106) an overall perception evaluation result of the multiple services used by the user according to all perception evaluation results and corresponding service weight values.

2. The method as claimed in claim 1, wherein acquiring the perception evaluation result of each service among the multiple services used by the user comprises:
   executing a perception evaluation grading operation on each service by using a pre-determined algorithm according to a service evaluation index corresponding to each service to obtain the perception evaluation result.

3. The method as claimed in claim 2, wherein before the perception evaluation result of each service among the multiple services used by the user is acquired, the method comprises:
   setting the service evaluation index corresponding to each service according to a service type of each service.

4. The method as claimed in claim 3, wherein before the service evaluation index corresponding to each service is set according to the service type of each service, the method comprises:

   acquiring service data generated in an internet-surfing process of the user; and
   identifying each service used by the user and the service type corresponding to each service from the service data.

5. The method as claimed in claim 3 or 4, wherein the service type comprises: a webpage browsing service, an instant messaging service, a blog service, a Weibo service, a search service, a game service or a video watching service.

6. The method as claimed in claim 5, wherein
when the service type is the webpage browsing service, the service evaluation index comprises at least one of: a home page request success rate, a home page request average total delay, a session-level webpage complete opening rate, a session-level webpage complete opening delay and a session-level webpage complete response average delay;
when the service type is the instant messaging service, the service evaluation index comprises at least one of: a login success rate, an uplink message success rate, an uplink message average delay, a downlink message success rate and a downlink message average delay; and
when the service type is the Weibo service, the service evaluation index comprises at least one of: a refreshing response average delay, a refreshing operation success rate, a refreshing speed, an issuing response average delay, an issuing operation success rate and an issuing speed.

7. The method as claimed in any one of claims 1 to 4, wherein the service parameter information comprises at least one of: a service using time length, a service using frequency and a service traffic magnitude.

8. A system for evaluating user perception, comprising:

a first acquisition component (10), configured to acquire a perception evaluation result of each service among multiple services used by a user;
an allocation component (20), configured to allocate a service weight value corresponding to each service according to service parameter information of each service used by the user, wherein the service weight value refers to a ratio of each service to the multiple services; and
a generation component (30), configured to generate an overall perception evaluation result of the multiple services used by the user according to all perception evaluation results and corresponding service weight values.

9. The system as claimed in claim 8, further comprising:

a setting component (40), configured to set a service evaluation index corresponding to each service according to a service type of each service; and
a grading component (50), configured to execute a perception evaluation grading operation on each service by using a pre-determined algorithm according to the service evaluation index corresponding to each service to obtain the perception evaluation result.

10. The system as claimed in claim 9, further comprising:

a second acquisition component (60), configured to acquire service data generated in an internet-surfing process of the user; and
an identification component (70), configured to identify each service used by the user and the service type corresponding to each service from the service data.

**Patentansprüche**

1. Verfahren zum Beurteilen von Nutzerwahrnehmung, das von einem System durchgeführt wird, umfassend:

Erfassen (S102) eines Wahrnehmungsbeurteilungsergebnisses jedes Dienstes unter mehreren Diensten, die von einem Nutzer genutzt werden;
Zuweisen (S104) eines entsprechenden Dienstgewichtungswerts zu jedem Dienst gemäß Dienstparameterinformationen jedes vom Nutzer genutzten Dienstes, wobei sich der Dienstgewichtungswert auf ein Verhältnis jedes Dienstes zu den mehreren Diensten bezieht; und
Generieren (S106) eines Wahrnehmungsbeurteilungs-Gesamtergebnisses der mehreren vom Nutzer genutzten Dienste gemäß allen Wahrnehmungsbeurteilungsergebnissen und entsprechenden Dienstgewichtungswerten.

2. Verfahren nach Anspruch 1, wobei das Erfassen des Wahrnehmungsbeurteilungsergebnisses jedes Dienstes unter den mehreren vom Nutzer genutzten Diensten umfasst:
Ausführen eines Wahrnehmungsbeurteilungs-Klassierungsvorgangs an jedem Dienst unter Verwendung eines vorbestimmten Algorithmus gemäß einem Dienstbeurteilungsindex, der jedem Dienst entspricht, um das Wahrnehmungsbeurteilungsergebnis zu erhalten.

3. Verfahren nach Anspruch 2, wobei das Verfahren, bevor das Wahrnehmungsbeurteilungsergebnis jedes Dienstes unter den mehreren vom Nutzer genutzten Diensten erfasst wird, umfasst:
Festlegen des Dienstbeurteilungsindex, der jedem Dienst entspricht, gemäß einem Diensttyp jedes Dienstes.

4. Verfahren nach Anspruch 3, wobei das Verfahren, bevor der Dienstbeurteilungsindex, der jedem Dienst entspricht, gemäß dem Diensttyp jedes Dienstes festgelegt wird, umfasst:

   Erfassen von Dienstdaten, die in einem Internetsurfprozess des Nutzers generiert werden; und
   Identifizieren jedes Dienstes, der vom Nutzer genutzt wird, und des Diensttyps, der jedem Dienst entspricht, aus den Dienstdaten.

5. Verfahren nach Anspruch 3 oder 4, wobei der Diensttyp umfasst: einen Webseiten-Browsing-Dienst, einen Instant-Messaging-Dienst, einen Blog-Dienst, einen Weibo-Dienst, einen Suchdienst, einen Spieledienst oder einen Videoanzeigedienst.

6. Verfahren nach Anspruch 5, wobei
wenn der Diensttyp der Webseiten-Browsing-Dienst ist, der Dienstbeurteilungsindex mindestens eines umfasst aus: einer Homepage-Aufruf-Erfolgsrate, einer durchschnittlichen Homepage-Aufruf-Gesamtverzögerung, einer Webseiten-Komplettöffnungsrate auf Sitzungsebene, einer Webseiten-Komplettöffnungsverzögerung auf Sitzungsebene, und einer durchschnittlichen Webseiten-Komplettansprechverzögerung auf Sitzungsebene;
wenn der Diensttyp der Instant-Messaging-Dienst ist, der Dienstbeurteilungsindex mindestens eines umfasst aus: einer Login-Erfolgsrate, einer Uplink-Nachrichten-Erfolgsrate, einer durchschnittlichen Uplink-Nachrichten-Verzögerung, einer Downlink-Nachrichten-Erfolgsrate und einer durchschnittlichen Downlink-Nachrichten-Verzögerung; und
wenn der Diensttyp der Weibo-Dienst ist, der Dienstbeurteilungsindex mindestens eines umfasst aus: einer durchschnittlichen Aktualisierungs-Ansprechverzögerung, einer Aktualisierungsvorgangs-Erfolgsrate, einer Aktualisierungsgeschwindigkeit, einer durchschnittlichen Ausgabeantwortverzögerung, einer Ausgabevorgangs-Erfolgsrate und einer Ausgabegeschwindigkeit.

7. Verfahren nach einem der Ansprüche 1 bis 4, wobei die Dienstparameterinformationen mindestens eines umfassen aus: einer Dienstnutzungszeitlänge, einer Dienstnutzungshäufigkeit und einer Dienstverkehrsgröße.

8. System zum Beurteilen von Nutzerwahrnehmung, umfassend:

   eine erste Erfassungskomponente (10), die dazu konfiguriert ist, ein Wahrnehmungsbeurteilungsergebnis jedes Dienstes unter mehreren Diensten, die von einem Nutzer genutzt werden, zu erfassen;
   eine Zuweisungskomponente (20), die dazu konfiguriert ist, einen Dienstgewichtungswert, der jedem Dienst entspricht, gemäß Dienstparameterinformationen jedes vom Nutzer genutzten Dienstes zuzuweisen, wobei sich der Dienstgewichtungswert auf ein Verhältnis jedes Dienstes zu den mehreren Diensten bezieht; und
   eine Generierungskomponente (30), die dazu konfiguriert ist, ein Wahrnehmungsbeurteilungs-Gesamtergebnis der mehreren vom Nutzer genutzten Dienste gemäß allen Wahrnehmungsbeurteilungsergebnissen und entsprechenden Dienstgewichtungswerten zu generieren.

9. System nach Anspruch 8, weiter umfassend:

   eine Festlegungskomponente (40), die dazu konfiguriert ist, einen Dienstbeurteilungsindex, der jedem Dienst entspricht, gemäß einem Diensttyp jedes Dienstes festzulegen; und
   eine Klassierungskomponente (50), die dazu konfiguriert ist, einen Wahrnehmungsbeurteilungs-Klassierungsvorgang an jedem Dienst unter Verwendung eines vorbestimmten Algorithmus gemäß dem Dienstbeurteilungsindex, der jedem Dienst entspricht, auszuführen, um das Wahrnehmungsbeurteilungsergebnis zu erhalten.

10. System nach Anspruch 9, weiter umfassend:

eine zweite Erfassungskomponente (60), die dazu konfiguriert ist, Dienstdaten, die in einem Internetsurfprozess des Nutzers generiert werden, zu erfassen; und

eine Identifizierungskomponente (70), die dazu konfiguriert ist, jeden Dienst, der vom Nutzer genutzt wird, und den Diensttyp, der jedem Dienst entspricht, aus den Dienstdaten zu identifizieren.

## Revendications

1. Procédé d'évaluation de la perception par un utilisateur, effectué par un système, comprenant :

   l'acquisition (S102) d'un résultat d'évaluation de la perception de chaque service parmi de multiples services utilisés par un utilisateur ;
   l'attribution (S104) d'une valeur de pondération de service correspondante à chaque service en fonction d'informations sur des paramètres de service de chaque service utilisé par l'utilisateur, dans lequel la valeur de pondération de service se rapporte à un rapport de chaque service aux multiples services ; et
   la génération (S106) d'un résultat global d'évaluation de la perception des multiples services utilisés par l'utilisateur en fonction de l'ensemble des résultats d'évaluation de la perception et des valeurs de pondération de service correspondantes.

2. Procédé selon la revendication 1, dans lequel l'acquisition du résultat d'évaluation de la perception de chaque service parmi les multiples services utilisés par l'utilisateur comprend :
   l'exécution d'une opération de notation de l'évaluation de la perception sur chaque service en utilisant un algorithme prédéterminé en fonction d'un indice d'évaluation de service correspondant à chaque service pour obtenir le résultat d'évaluation de la perception.

3. Procédé selon la revendication 2, dans lequel avant que le résultat d'évaluation de la perception de chaque service parmi les multiples services utilisés par l'utilisateur ait été acquis, le procédé comprend :
   la définition de l'indice d'évaluation de service correspondant à chaque service en fonction d'un type de service de chaque service.

4. Procédé selon la revendication 3, dans lequel avant que l'indice d'évaluation de service correspondant à chaque service ait été défini en fonction du type de service de chaque service, le procédé comprend :

   l'acquisition de données de service générées lors d'un processus de navigation sur Internet de l'utilisateur ; et
   l'identification de chaque service utilisé par l'utilisateur et du type de service correspondant à chaque service à partir des données de service.

5. Procédé selon les revendications 3 ou 4, dans lequel le type de service comprend : un service de navigation dans une page Web, un service de messagerie instantanée, un service de blog, un service Weibo, un service de recherche, un service de jeu ou un service de visionnage de vidéo.

6. Procédé selon la revendication 5, dans lequel
   lorsque le type de service est le service de navigation dans une page Web, l'indice d'évaluation de service comprend au moins l'un parmi : un taux de succès suite à une demande de page d'accueil, un retard total moyen suite à une demande de page d'accueil, un taux d'ouverture complète d'une page Web au niveau d'une session, un retard d'ouverture complète d'une page Web au niveau d'une session et un retard moyen de réponse complète d'une page Web au niveau d'une session ;
   lorsque le type de service est le service de messagerie instantanée, l'indice d'évaluation de service comprend au moins l'un parmi : un taux de succès de l'établissement d'une connexion, un taux de succès d'un message en liaison montante, un retard moyen d'un message en liaison montante, un taux de succès d'un message en liaison descendante et un retard moyen d'un message en liaison descendante ; et
   lorsque le type de service est le service Weibo, l'indice d'évaluation de service comprend au moins l'un parmi : un retard moyen de réponse de rafraîchissement, un taux de succès d'une opération de rafraîchissement, une vitesse de rafraîchissement, un retard moyen d'émission d'une réponse, un taux de succès d'une opération d'émission et une vitesse d'émission.

7. Procédé selon l'une quelconque des revendications 1 à 4, dans lequel les informations sur des paramètres de service comprennent au moins l'un parmi : une durée d'utilisation du service, une fréquence d'utilisation du service et une ampleur de trafic du service.

8. Système d'évaluation de la perception par un utilisateur, comprenant :

un premier composant d'acquisition (10), configuré pour acquérir un résultat d'évaluation de la perception de chaque service parmi de multiples services utilisés par un utilisateur ;
un composant d'attribution (20), configuré pour attribuer une valeur de pondération de service correspondant à chaque service en fonction d'informations sur des paramètres de service de chaque service utilisé par l'utilisateur, dans lequel la valeur de pondération de service se rapporte à un rapport de chaque service aux multiples services ; et
un composant de génération (30), configuré pour générer un résultat global d'évaluation de la perception des multiples services utilisés par l'utilisateur en fonction de l'ensemble des résultats d'évaluation de la perception et des valeurs de pondération de service correspondantes.

9. Système selon la revendication 8, comprenant en outre :

un composant de définition (40), configuré pour définir un indice d'évaluation de service correspondant à chaque service en fonction d'un type de service de chaque service ; et
un composant de notation (50), configuré pour exécuter une opération de notation de l'évaluation de la perception sur chaque service en utilisant un algorithme prédéterminé en fonction de l'indice d'évaluation de service correspondant à chaque service pour obtenir le résultat d'évaluation de la perception.

10. Système selon la revendication 9, comprenant en outre :

un second composant d'acquisition (60), configuré pour acquérir des données de service générées lors d'un processus de navigation sur Internet de l'utilisateur ; et
un composant d'identification (70), configuré pour identifier chaque service utilisé par l'utilisateur et le type de service correspondant à chaque service à partir des données de service.

A perception evaluation result of each service among multiple services used by a user is acquired ⌇ S102

A corresponding service weight value is allocated to each service according to service parameter information of each service used by the user, wherein the service weight value refers to a ratio of each service to the multiple services ⌇ S104

An overall perception evaluation result of the multiple services used by the user is generated according to all perception evaluation results and corresponding service weight values ⌇ S106

**Fig. 1**

First acquisition component 10

Allocation component 20

Generation component 30

**Fig. 2**

```
┌─────────────────────────┐
│   Second acquisition    │
│    component 60         │
└─────────────────────────┘
           │
┌─────────────────────────┐
│    Identification        │
│    component 70         │
└─────────────────────────┘
           │
┌─────────────────────────┐
│   Setting component     │
│        40              │
└─────────────────────────┘
           │
┌─────────────────────────┐
│   Grading component     │
│        50              │
└─────────────────────────┘
           │
┌─────────────────────────┐
│    First acquisition     │
│    component 10         │
└─────────────────────────┘
           │
┌─────────────────────────┐
│      Allocation          │
│    component 20         │
└─────────────────────────┘
           │
┌─────────────────────────┐
│      Generation          │
│    component 30         │
└─────────────────────────┘
```

**Fig. 3**

Overall architecture of system for
evaluating user perception

Overall perception generation component

Dynamic service weight allocation component

Service grading evaluation component

| Grading service 1 | Grading service 2 | Grading service 3 | ... ... | Grading service n |

Service index acquisition component

| Index of service 1 | Index of service 2 | Index of service 3 | ... ... | Index of service n |

Service identification and classification component

Network data acquisition component

**Fig. 4**

Overall grading

Weight of webpage browsing service — Grading of webpage browsing service

- Home page request success rate
- Home page request average total delay
- Session-level webpage complete opening rate
- Session-level webpage downloading speed
- Session-level webpage complete response average delay

Weight of QQ service — Grading of QQ service

- Login success rate
- Uplink message success rate
- Downlink message success rate
- Uplink message response delay
- Downlink message response delay

Weight of Weibo service — Grading of Weibo service

- Refreshing response average delay
- Refreshing operation success rate
- Refreshing speed
- Issuing response average delay
- Issuing operation success rate
- Issuing speed

**Fig. 5**

| Service name | Service using time length | Service weight |
|---|---|---|
| Webpage browsing service | 8 hours | 8/(8+8+4) |
| QQ service | 8 hours | 8/(8+8+4) |
| Weibo service | 4 hours | 4/(8+8+4) |

**Fig. 6**

| Service name | KPI | Weighting factor |
|---|---|---|
| Webpage browsing service | Page view request frequency | Factor_http |
| QQ service | Login frequency | Factor_QQ1 |
| | User message sending frequency | Factor_QQ2 |
| | User message receiving frequency | Factor_QQ3 |
| Weibo service | Refreshing request frequency | Factor_wb1 |
| | Issuing request frequency | Factor_wb2 |

**Fig. 7**

| Service name | Service using traffic | Weighting factor | Service weight |
|---|---|---|---|
| Webpage browsing service | 10M | Factor_http | 10* Factor_http /(10* Factor_http +2* Factor_QQ +3* Factor_wb) |
| QQ service | 2M | Factor_QQ | 2* Factor_QQ /(10* Factor_http +2* Factor_QQ +3* Factor_wb) |
| Weibo service | 3M | Factor_wb | 3* Factor_wb /(10* Factor_http +2* Factor_QQ +3* Factor_wb) |

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012008499 A

**Non-patent literature cited in the description**

- A study on the extraction and application of customer perception indexes in mobile network. **YU DU et al.** IT IN MEDICINE&EDUCATION, 2009. ITIME'09. IEEE INTERNATIONAL SYMPOSIUM ON. IEEE, 14 August 2009, 436-440